# EUROPEAN PATENT APPLICATION

(11) **EP 4 844 103 A1**
(43) Date of publication of application: **25.11.2026**
(21) Application number: 25178089.6
(22) Date of filing: 21.05.2025
(51) Int. Cl.: C25B 1/04, C01B 32/60, B01D 53/00, C25B 15/027, C01F 11/18, C01F 5/24, C25B 15/029, C25B 15/02, C25B 15/031, C25C 1/08, C25B 15/00, C25B 9/05, C25B 15/08, C25B 9/17, C25B 1/01, C25B 11/042

(54) **A METHOD AND A SYSTEM FOR PRODUCING CARBONATE FROM CARBON DIOXIDE**

(71) Applicant: CCM Rights AS, 9257 Kokstad (NO)
(72) Inventor: El Amrani, Redaa Allah, Benguérir (MA); Ikovenko, Sergei, Boston 02114 (US); Yatsunenko, Sergiy, 01-756 Warsaw (PL); Hagenes, Knut, 5357 Fjell (NO)
(74) Representative: Kancelaria Eupatent.pl Sp. z o.o.

(57) **Abstract**

A method for producing carbonates using carbon dioxide, comprising the steps of: in a hydration tank (11), injecting carbon dioxide (CO₂) into a process liquid, wherein the process liquid comprises water, and reacting carbon dioxide (CO₂) with water in the presence of a catalyst to form a first reaction product, being the product of the reaction between carbon dioxide and water; and in a carbonation tank (12), adding to the first reaction product: an M²⁺ solution and a solution of alkali metal hydroxide to form a second reaction product, being a carbonate salt, characterized by: providing an electrochemical catalytic (EC) module (14) comprising electrodes, in the hydration tank (11), at a pressure not exceeding 15 atmospheres, providing the electrodes of the EC module (14) immersed in the process liquid, and while reacting carbon dioxide (CO₂) with water, supplying metal ions as the catalyst by operating the EC module (14) in a pulse-reverse mode in which one of the electrodes is arranged as a donor of the metal ions.

## Description

### TECHNICAL FIELD

The present invention relates to the chemical industry, specifically to the production of carbonate from carbon dioxide through a catalytic hydration process.

### BACKGROUND

The increasing concentrations of carbon dioxide (CO₂) in the atmosphere present significant environmental challenges, prompting the development of technologies aimed at converting carbon dioxide into beneficial products. Among these efforts, the production of carbonates, particularly calcium carbonate, from carbon dioxide, presents a promising direction due to its wide applications in building materials and other sectors. Conventional methods for carbonate production suffer from several disadvantages, including low efficiency, high labor demands, and contamination of the final product with catalysts, such as nickel.

Existing technologies primarily involve the hydration of carbon dioxide to form carbonic acid, followed by a series of reactions to precipitate calcium carbonate. Despite certain efficiencies, these technologies require significant improvements to meet the demands of environmental sustainability and economic viability. The invention disclosed herein is based on proven scientific principles and introduces a semi-batch process that not only enhances reaction efficiency but also significantly reduces contamination of the final product with catalysts.

By incorporating a fundamentally breakthrough catalytic mechanism, this method represents a revolutionary approach to carbonate production. This innovation not only effectively addresses the problem of carbon dioxide emissions impacting the environment but also opens new opportunities for the economically viable production of building materials, thereby significantly contributing to the circular economy.

A known method for hydrating carbon dioxide to produce calcium carbonate is disclosed in US9789439B2. It involves the following steps: 1) Initiating the interaction of carbon dioxide in the form of small bubbles with a liquid, such as water or an aqueous solution, leading to the formation of carbonic acid. This reaction of carbon dioxide with water takes place in the presence of a metal catalyst in the form of nickel nanoparticles. 2) Adding a solution of M²⁺ into the product of the reaction of carbon dioxide and water, wherein M is selected from Ca, Mg, or their mixtures. 3) Adding a NaOH solution and a CaCl₂ solution to the carbonic acid solution, resulting in the precipitation of CaCO₃ and the formation of a NaCl solution.

The aforementioned process is continuous, with the hydration of carbon dioxide occurring in the presence of a catalyst in the form of nickel nanoparticles. The process requires capturing the nickel nanoparticles at a certain stage and reusing them. This process is not only labor-intensive but also has a notable disadvantage: the presence of nickel nanoparticles in the final product (calcium carbonate), which negatively affects its quality.

### SUMMARY OF THE INVENTION

The solution presented herein employs a homogeneous electrocatalytic (HEC) process to increase the efficiency and purity of the produced carbonates, specifically calcium carbonate (CaCO₃) and magnesium carbonate (MgCO₃). This method effectively addresses and mitigates the drawbacks associated with existing technologies, including product contamination with catalysts and process inefficiency. As such, it offers a sustainable and economically viable approach for converting carbon dioxide into valuable carbonate materials, utilizing, for example, industrial waste as a source of substrates in the synthesis of carbonates.

The proposed solution pertains to the chemical industry, specifically to technologies for processing carbon dioxide through the HEC process. Converting CO₂ into a valuable product not only prevents its release into the atmosphere but also opens up significant opportunities for the economically viable production of construction materials. The method can be particularly applied to the production of materials directly from carbon dioxide in a semi-batch process that merges the benefits of both continuous and batch production, providing a balance between process efficiency and flexibility.

The purpose of the technical solution proposed herein is to eliminate the drawbacks of the prior art processes and enhance production efficiency. The enhancement is achieved through the use of a homogeneous catalyst (HC) introduced in a strictly controlled manner into the reaction environment and precisely removed from it at the desired reaction stage. This approach prevents contamination of the reagents by the catalyst. Additionally, a new electrochemical catalytic (EC) module is employed, providing optimal conditions for the reaction to proceed.

In one aspect, the invention relates to a method for producing carbonates using carbon dioxide, comprising the steps of injecting carbon dioxide (CO₂) into a process liquid in a hydration tank, where the process liquid comprises water, and reacting carbon dioxide with water in the presence of a catalyst to form a first reaction product. In a carbonation tank, an M²⁺ solution and a solution of alkali metal hydroxide are added to the first reaction product to form a carbonate salt. The method is characterized by providing an electrochemical catalytic (EC) module comprising electrodes, in the hydration tank, at a pressure not exceeding fifteen atmospheres, providing the electrodes of the EC module immersed in the process liquid; and while reacting carbon dioxide (CO₂) with water, supplying metal ions as the catalyst by operating the EC module in a pulse-reverse mode in which one of the electrodes is arranged as a donor of the metal ions.

This method enables the controlled delivery of a homogeneous catalyst (HC) directly to the reaction environment. Namely, the hydration process takes place in the presence of the metal ions serving as the HC, provided into the reaction mixture resulting in the formation of carbonic acid. The catalyst, in the form of metal ions, can be evenly dispersed throughout the reaction, increasing contact between the catalyst and reagents. This configuration leads to faster reaction rates compared to traditional homogeneous systems.

Additionally, while HC may degrade over time or require frequent replenishment, the controlled delivery of metal ions from the donor electrode enhances stability and reduces the need for additional catalysts.

The pulse-reverse mode provides precise control over the concentration of metal ions, facilitating fine-tuning of reaction conditions at a level of control that is often difficult to achieve in homogeneous systems.

Preferably, the method further comprises, in the hydration tank, removing the metal ions from the first reaction product by operating the EC module in a continuous mode in which at least one of the electrodes is arranged as an acceptor of the metal ions by reducing the metal ions on its surface.

By implementing the continuous mode, efficient removal of the metal ions is provided. Thereby, operating the EC module represents a highly selective way of withdrawing the catalyst molecules from the reaction environment, so that neither the first reaction product nor the carbonates exhibit contamination with the catalyst.

Preferably, the pulse-reverse mode employs operating the EC module comprising a first electrode and a second electrode configured as two donor-acceptor electrodes made of the same metal, in a bipolar pulsed manner comprising alternating pulses of two polarities, wherein in a positive polarity, the first electrode functions as the anode, and the second electrode functions as the cathode, and in a negative polarity, the first electrode functions as the cathode, and the second electrode functions as the anode, thereby causing: oxidation of the anode and release of the metal ions, reduction and deposition of the metal ions on the cathode, oxidation of water on the anode and release of protons and oxygen (O₂), and reduction of protons on the cathode and release of hydrogen (H₂), and thereby supplying the metal ions to the reacting carbon dioxide (CO₂) with water.

Under the positive polarity, oxidation occurs at the anode, releasing metal ions (e.g., Ni²⁺) into the reaction medium. This process is sustained by a combination of high current density and short pulses of the positive polarity, ensuring a continuous supply of the catalyst and enhancing the reaction kinetics.

Under the negative polarity, the reduction of metal ions at the cathode facilitates their deposition onto the electrode, stabilizing the concentration of active ions in the medium. Extended pulses of the negative polarity play a crucial role in minimizing the likelihood of local overloading and side effects.

The bipolar pulse mode of the EC module provides flexibility in controlling parameters such as current density, pulse frequency, and pulse duration, enabling precise tuning of the process conditions.

Preferably, the EC module operates with alternating pulses of the positive polarity and the negative polarity at a pulse frequency selected from the range of 50 to 500 Hz, and/or with a pulse duration selected in the range of 1 to 100 ms, and/or at a current density selected in the range of 0.05 to 0.5 A/dm², wherein the pulses of the positive polarity are preferably shorter than the pulses of the negative polarity.

Shorter pulses of the positive polarity (1 - 30 ms) enable a rapid release of the metal ions, while longer pulses of the negative polarity (10 - 60 ms) promote the stabilization of the reaction medium, equalizing ion concentrations and maintaining the system's optimal operating conditions.

This approach allows for precise adjustment of catalyst concentration at each stage of the process, significantly enhancing reaction efficiency.

The control of key electrical pulse parameters, including current density, pulse frequency, and duration, enables precise system optimization to improve reaction dynamics. For instance, high current density combined with short pulses of the positive polarity facilitates frequent release of the metal ions, maintaining a high concentration of the catalyst in the reaction medium. This can significantly accelerate the reaction rate. Conversely, lower current density and extended pulses of the negative polarity stabilize and deposit metal ions onto the cathode, reducing their concentration in the medium. The control of these parameters provides flexibility in adjusting concentration of the catalyst at each stage of the reaction.

Additionally, pulse frequency plays a crucial role in creating a dynamic environment of the reaction medium. Low frequency during the initial reaction stage promotes thorough saturation of the medium with the metal ions; high frequency in subsequent stages ensures dynamic equilibrium, minimizing local overloading. This approach ensures uniform distribution of reaction components and products, thereby enhancing the overall efficiency of the reaction. Particular parameters that determine the intensity and stability of the process include: current density - the primary factor influencing the intensity of the metal ions release and the overall reaction efficiency; pulse frequency - regulates the cyclic nature and intensity of the metal ions release and recovery processes of the catalyst; pulse duration - defines the nature of mass transfer, ensuring a balance between reaction rate and medium stabilization; ratio of positive to negative pulse durations - allows fine-tuning of the process to prevent local oversaturation of the medium and achieve uniform ion distribution.

A combined approach, based on simultaneous control of the above-mentioned parameters, provides flexibility in process configuration and adaptation to various conditions.
Preferably, the stages of process optimization comprise: first stage that involves saturation of the reaction medium with the metal ions to initiate the hydration reaction through an intensive release of the metal ions carried out until a stable concentration of the metal ions is established. The preferred parameters and mechanisms of the first stage preferably include a current density increased to 0.2 - 0.5 A/dm² to ensure intensive release of the metal ions, a pulse frequency set at 50-100 Hz -to allow for extended cycles of the metal ions release and recovery, a pulse duration maintained at 50-100 ms to promote thorough saturation of the medium, and a ratio of positive to negative pulse balanced at 1:1 to maximize equilibrium between the metal ions release and recovery thereby providing rapid saturation of the medium with the metal ions and minimizing concentration fluctuations through precise parameter control. Following the first stage, a second stage is carried out, wherein the metal ions concentration is stabilized and the process intensity is controlled to prevent side effects, such as oversaturation. The preferred objectives of the second stage include maintaining stable concentration of the metal ions and fine-tune the reaction based on the rate of mass transfer. The preferred parameters and mechanisms for the second stage preferably include a current density reduced and stabilized at 0.1-0.2 A/dm², a pulse frequency increased to 100-400 Hz for faster ion release/recovery cycles, a pulse duration adjusted to 10-50 ms depending on reaction conditions, and a ratio of positive to negative pulse durations shifted in favor of positive pulses (e.g., 2:1 or 3:1) to maintain the metal ions activity while minimizing local oversaturation, thereby ensuring stabilized concentration of the metal ions in the medium, eliminating side effects associated with excessive ion concentrations, and efficient distribution of the catalyst throughout the reaction medium.

Process parameters management involves adjusting current density, pulse frequency, pulse duration, and the ratio of positive to negative pulse durations in a manner that ensures optimal CO₂ hydration. Low current densities (0.05-0.1 A/dm²) are used for slow reactions, as they provide a gentle effect on the medium, minimize side effects, and create conditions for stable, gradual saturation with the metal ions. Medium current densities (0.1-0.2 A/dm²) are suitable for moderately intense reactions, maintaining a balance between the rate of the metal ions release and medium stability while enabling effective control of reaction dynamics. High current densities (0.2-0.5 A/dm²) are applied for fast reactions, as they ensure intensive release of the metal ions, accelerate mass transfer processes, and help rapidly achieve the desired concentration of active substances. Pulse frequency ranges from low (50-100 Hz), used in the initial stage of medium saturation to provide longer exposure and deeper metal ions penetration, to high (100-400 Hz), which is applied in later stages for rapid alternation between the release of the metal ions and recovery of the catalyst, maintaining a dynamic equilibrium and preventing local overloading of the reaction medium. Pulse duration can be short (1-10 ms) for reactions with high mass transfer rates, medium (10-50 ms) for moderately intense process requiring stability, or long (50-100 ms) for slow reactions necessitating deep saturation; for fast reactions short pulses prevent local overloading and ensure dynamic stability are preferred.

The ratio of positive to negative pulse durations is selected based on the desired outcome: a 1:1 ratio (equal positive and negative pulses) ensures rapid saturation by balancing the metal ions release and recovery, creating conditions for the uniform distribution of the catalyst in the reaction medium, ratios of 2:1 or 3:1 favor positive pulses for maintaining a high concentration of the metal ions and preventing oversaturation (i.e., an excessive accumulation of the reaction products), and ratios 3:2 or 4:3 with extended negative pulses help prevent local polarization and side effects by promoting thorough the metal ions recovery.

Preferably, the method according to claim 2 and any of the preceding claims, comprising while reacting carbon dioxide (CO₂) with water in the presence of the metal ions, measuring pH in the hydration tank (11), and if the measured pH value reaches a value from the pH range of 3.5 to 3.6, switching the EC module (14) operating in the pulse-reverse mode, to the continuous mode.

The process can be monitored using pH meters, temperature sensors, and metal ions concentration analyzers, such as nickel ion concentration analyzer, or copper ion concetration analyzer, with control units enabling precise adjustment of pulse parameters. This combined approach offers flexibility in adapting the reaction to various conditions, improvs mass transfer efficiency, and reduces the likelihood of side effects by ensuring stable distribution of the metal ions.

Adjusting the above-mentioned electrical pulse parameters (including current density, pulse frequency, duration, and the ratio of positive to negative pulse durations) optimizes the CO₂ hydration process for stability and efficiency, creating opportunities for further enhancement and application in sustainable technologies.

Real-time monitoring of pH, temperature, and ion concentration in the reaction medium allows for dynamic adjustment of hydration process conditions, ensuring optimal performance in accordance with the current state of the system. Monitoring these parameters also provides an accurate indication of the hydration process's completion, based not only on achieving a pH range of 3.5 to 3.6 but also on the stabilization of pH, temperature, and readings of the metal ions concentration over a specific period.

Timely identification of the process's completion facilitates preparatory operations before switching the EC module from the pulse-reverse to continuous mode, such as ceasing CO₂ supply and releasing pressure in the tank.

Preferably, the continuous mode employs operating the EC module comprising at least one of the donor-acceptor electrodes and an auxiliary electrode, in a constant polarity, wherein: at least one of the donor-acceptor electrodes (141, 142) functions as the cathode, and the auxiliary electrode (143) functions as the anode, causing reduction and deposition of the metal ions on the cathode, thereby removing the metal ions from the first reaction product.

The use of a single auxiliary electrode simplifies the electrode configuration compared to more complex systems, making the design and implementation of the process more straightforward. By effectively removing metal ions from the first reaction product, this configuration simplifies downstream separation and purification processes, reducing costs and improving product purity.

Preferably, the donor-acceptor electrodes are made of nickel, and the metal ions donated therefrom are nickel ions (Ni²⁺), or copper, and the metal ions donated therefrom are copper ions (Cu²⁺), and the auxiliary electrode (143) is made of titanium (Ti), graphite or carbon fibers. This combination of materials ensures the high efficiency of the EC module due to their superior electrochemical properties, corrosion resistance, and compatibility with HEC processes. Additionally, the selected materials offer versatility and adaptability for scaling production, making the system equally effective for small-scale and large-scale industrial applications while maintaining economic viability.

Preferably, the process liquid is water or an aqueous solution, the M²⁺ solution is an aqueous CaCl₂ solution or an aqueous MgCl₂ solution, and the solution of alkali metal hydroxide is an aqueous NaOH solution or an aqueous KOH solution.

Both CaCl₂ and MgCl₂ are highly soluble in water, which facilitates the formation of clear, homogeneous solutions. This enhances the reactivity and efficiency of subsequent formation of the respective carbonate salt. The use of either NaOH or KOH effectively adjusts the pH to the required alkalinity of the reaction environment. Furthermore, these chemicals constitute readily available and inexpensive reactants, which makes them cost-effective choices for large-scale production of carbonates.

Preferably, method further comprises subjecting a content of the hydration tank or a content of the carbonation tank to an ultrasound treatment by means of an ultrasonic oscillations source. More preferably, the ultrasound treatment is carried out applying a power in the range of 20 W/dm³ to 60 W/dm³, and/or a frequency of the ultrasonic oscillation in the range of 20 kHz to 200 kHz.

Ultrasonic oscillations accelerate reaction kinetics by creating localized high-energy environments (cavitation), leading to faster chemical reactions. Furthermore, ultrasonic oscillations promote thorough mixing at the microscopic level, ensuring uniform distribution of reactants. Thereby, the ultrasound treatment according to the present invention enhances reaction kinetics and mass transfer, with possible adjustments in ultrasound parameters to improve process efficiency.

In another aspect, the invention relates to a system for producing carbonates through a hydration of carbon dioxide in the presence of a catalyst to obtain a first reaction product being the product of the reaction between carbon dioxide and water, and carbonation of the first reaction product to obtain a second reaction product being a carbonate salt, the system comprising: a carbon dioxide tank, a carbon dioxide compressor for compressing the carbon dioxide; a liquid tank for storing process liquid, wherein the process liquid comprises water, a pressurizer for pressurizing the process liquid, a reactor comprising: a hydration tank for receiving the pressurized process liquid from the liquid tank, and the compressed carbon dioxide from the carbon dioxide tank, and a carbonation tank connected with an M²⁺ solution tank, an alkali metal hydroxide tank, a second reaction product tank, wherein the hydration tank and the carbonation tank are connected with a valve for transferring a content of the hydration tank to the carbonation tank. The system further comprises an electrochemical catalytic (EC) module connected with the hydration tank, the EC module is configured to operate in a pulse-reverse mode, for supplying metal ions as the catalyst, to the hydration tank, wherein the EC module comprises a first electrode and a second electrode, arranged in the hydration tank, configured as two donor-acceptor electrodes made of the same metal, configured to operate in a bipolar pulsed manner employing alternating pulses of two polarities, so that in a positive polarity, the first electrode functions as an anode, and the second electrode functions as a cathode, and in a negative polarity, the first electrode functions as the cathode, and the second electrode functions as the anode, thereby causing: oxidation of the anode and release of the metal ions, reduction and deposition of the metal ions on the cathode, oxidation of water on the anode and release of protons and oxygen (O₂), and reduction of protons on the cathode and release of hydrogen (H₂).

The carbon dioxide tank provides a controlled and consistent supply of carbon dioxide, ensuring a steady input for the reaction process. This helps maintain the efficiency and effectiveness of carbonate production. The carbon dioxide compressor compresses carbon dioxide to the required pressure, enhancing the solubility of CO₂ in the process liquid and improving the reaction kinetics. This leads to a more efficient conversion process.

The liquid tank stores the process liquid and ensures a continuous and reliable supply of the process liquid to the system, contributing to consistent reaction conditions. The pressurizer increases the pressure of the process liquid, which aids in the efficient mixing and reaction of carbon dioxide with water. This can enhance the rate of hydration and improve overall system performance. The M²⁺ solution tank supplies metal ions necessary for the carbonation process, allowing for the formation of specific carbonate salts. This flexibility can be tailored to produce different types of carbonate products. The alkali metal hydroxide tank provides alkali metal hydroxides that can react with the first reaction product to form carbonate salts. This enhances the versatility of the system in producing various carbonate compounds. The product tank collects the final carbonate product, ensuring safe and efficient storage. This allows for easy handling and transportation of the carbonate salts.

Preferably, the EC module is further configured to operate in a continuous mode for removing the metal ions from the first reaction product in the hydration tank, wherein the EC module comprises an auxiliary electrode, arranged in the hydration tank, configured to function as an anode applying a continuous potential upon cooperation with at least one of the donor-acceptor electrodes configured to function as a cathode, so that the metal ions are reduced and deposited on the cathode.

The auxiliary electrode, installed in the hydration tank, configured for operation in the continuous mode, assists in the effective removal of the metal ions. This facilitates seamless processing, resulting in enhanced throughput by obviating the necessity for additional treatment steps involving intricate and time-consuming catalyst removal procedures. Consequently, this approach conserves time, energy, and operational costs.

Preferably, the donor-acceptor electrodes are made of nickel or copper, and the auxiliary electrode is made of titanium, graphite or carbon fibers.
The selected materials provide optimal durability and performance of the electrode system together with supplying suitable metal ions.

Preferably, the system further comprises an ultrasonic oscillations source for subjecting the content of the hydration tank or the content of the carbonation tank to an ultrasound treatment.

The system comprising the ultrasonic oscillations source provides further improvement in the reaction kinetics and mass transfer.

Preferably, the system further comprises a hydrogen collection arrangement comprising a hydrogen membrane unit arranged in the hydration tank for selectively removing hydrogen form the hydration tank, a hydrogen tank for collecting the removed hydrogen, and a hydrogen flow rate regulator I arranged between the membrane unit and the hydrogen tank, and/or an oxygen collection arrangement comprising an oxygen membrane unit arranged in the hydration tank for selectively removing oxygen form the hydration tank, a n oxygen tank for collecting the removed oxygen, and an oxygen flow rate regulator H arranged between the membrane unit and the hydrogen tank.

By selectively removing hydrogen and oxygen from the hydration tank, the arrangement prevents the accumulation of gases that could interfere with the reaction equilibrium. The collected hydrogen and oxygen can be stored in dedicated tanks and repurposed for other industrial processes. Furthermore, this arrangement mitigates a risk of increased pressure, in the hydration tank, by continuously regulating gas levels, ensuring safe and stable operation of the system.

### BRIEF DESCRIPTION OF DRAWINGS

The present invention is shown by means of example embodiments in a drawing, wherein:
Fig. 1 shows a structural diagram of the system;
Fig. 2 shows a functional schematic of the system;

### DETAILED DESCRIPTION

The following detailed description is of the best currently contemplated modes of carrying out the invention. The description is not to be taken in a limiting sense, but is made merely to illustrate the general principles of the invention.

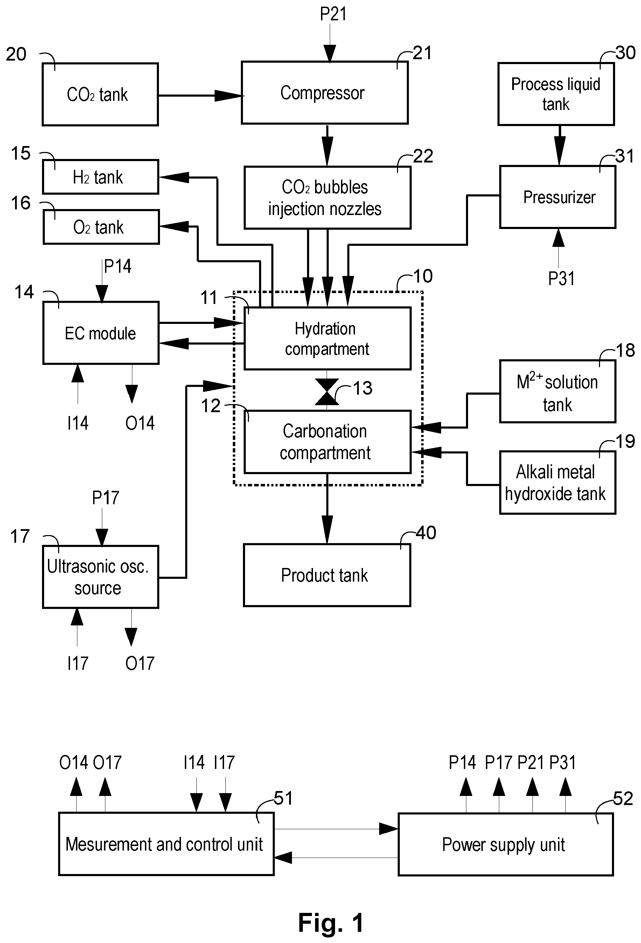

Fig. 1 presents a structural diagram of a system for carrying out the method for converting carbon dioxide to carbonate salts. The system comprises a reactor 10 comprising a hydration tank 11 and a carbonation tank 12 connected to each other with an adjustable valve 13 to transfer the content of the hydration tank 11 to the carbonation tank 12 when the valve 13 is open. This allows arranging a schedule of the technological process depending on demands, thereby maintaining desired conditions in each of the tanks 11, 12, providing real-time adjustment of process parameters.

The hydration tank 11 is connected to sources of necessary reactants for performing the hydration process, i.e., carbon dioxide and a process liquid through two channels. Carbon dioxide from a carbon dioxide tank 20 is compressed in a compressor 21 and supplied to carbon dioxide bubble injection nozzles 22. The carbon dioxide can be injected into the hydration tank 11 under a pressure range of 4 to 6 atmospheres. The process liquid from a liquid tank 30 is pressurized in a pressurizer 31 and supplied to the hydration tank 11 under the pressure range of 4 to 6 atmospheres. The process liquid comprises water, i.e. can be an aqueous solution or it can be water. In the hydration tank 11, carbon dioxide in the form of CO₂ bubbles is input to the process liquid by the injection nozzles 22, and carbon dioxide undergoes a reaction with water in the presence of a catalyst to form a product of the reaction between carbon dioxide and water, i.e., an aqueous solution of H₂CO₃ (carbonic acid). Due to the injection of CO₂, pressure in the hydration tank 11 can change, typically in the range of 1 to 5 atmospheres, which increases the CO₂ hydration rate.

The developed process of CO₂ hydration is arranged as a homogeneous electrocatalytic (HEC) process involving the catalysts in the same phase as the reactants. The metal ions serve as the catalyst. Preferably, the metal ions are selected from nickel ions (Ni²⁺) and cobalt ions (Cu²⁺). The metal ions that serve as the catalyst can mix uniformly with the reactants in the process liquid reaction environment. This results in a higher reaction rate and more efficient catalysis compared to heterogeneous systems.
The metal ions serving as the catalysts are provided into the hydration tank 11 by means of an electrochemical catalytic (EC) module 14, which can be further configured to regenerate the catalysts by withdrawing the metal ions from the reaction mixture when required, i.e., once the reaction is completed, or in case the reaction needs to be discontinued. Due to the operation of the EC module 14, the mixture leaving the hydration tank 11, notwithstanding the reaction stage, is uncontaminated with the catalyst. The operation principles of the EC module 14 will be explained below.
Preferably, the hydration reaction is conducted at a temperature range of 20 to 40 °C and a pressure range of 5 to 6 atmospheres.

The reactor 10 can be further equipped with an ultrasonic oscillation source 17 for generating ultrasonic oscillations in the hydration tank 11 or in the carbonation tank 12, depending on the process needs. Thereby, either the hydration or carbonation reaction can be carried out as an ultrasound-assisted process, at a given period, depending on special needs, as will be explained below.

Once the metal ions serving as the catalyst are removed from the post-reaction mixture, the content of the hydration tank 11 is transferred, via the adjustable valve 13, to the carbonation tank 12.
In the carbonation tank 12, a solution of alkali metal hydroxide, preferably NaOH solution or KOH solution, and an M²⁺ solution, preferably CaCl₂ solution or MgCl₂, are added to the first reaction mixture being carbonic acid solution. Calcium chloride (CaCl₂), as well as magnesium chloride (MgCl₂), is soluble in water due to its ionic nature and the strong attractive forces between the ions of the compound and water molecules. When the chloride is added to the water, the compound dissociates into its constituent ions: suitable ions M²⁺ (Ca²⁺ or Mg²⁺) and chloride ions (Cl⁻). As a result of chemical reactions, a solution comprising suitable carbonate (CaCO₃ or MgCO₃) and NaCl or KCl respectively, is formed in the carbonation tank 12.

Therefore, the carbonation tank 12 is connected to sources of the necessary reactants for performing the carbonation process. Namely, the Me²⁺ solution is supplied from an M²⁺ solution tank 18 and the alkali metal hydroxide is supplied from an alkali metal hydroxide tank 19. The carbonation product is transferred into the product tank 40.
Preferably, the carbonation reaction is carried out in the temperature range of 20 to 40 °C, pressure of 1 to 2 atmospheres.

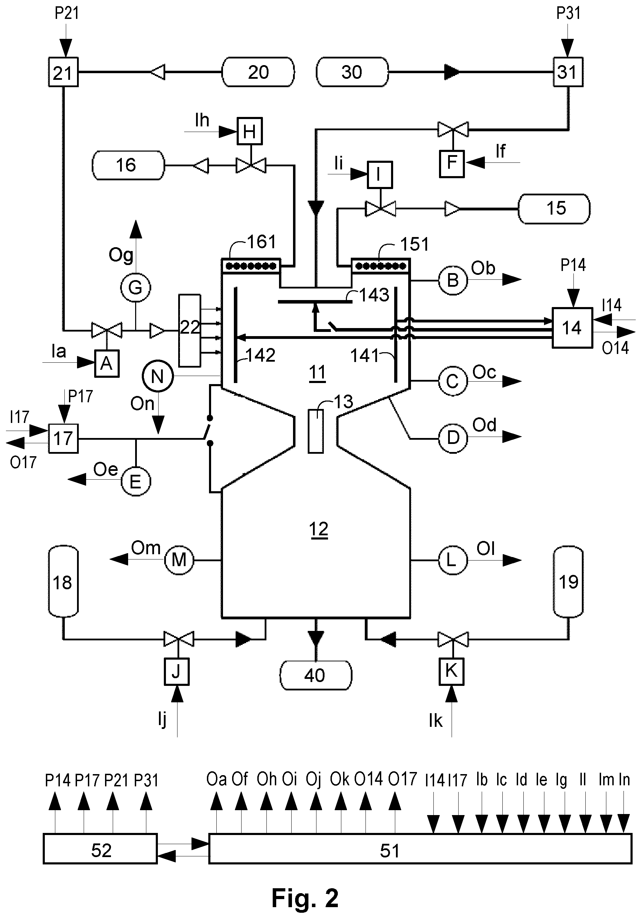

Fig. 2 illustrates a functional diagram of the system, in order to better explain its principles of operation, as provided below. In addition to the primary elements indicated by numeral references (1 - 40), Fig. 2 shows a series of secondary elements labeled with alphabetical references (A-N).

The reactor 10 is a unit of the CO₂ carbonation process, designed to create optimal conditions for the hydration and carbonation reactions. It is a two-tank system consisting of two identical cylindrical tanks 11 and 12, preferably made of stainless steel, ensuring corrosion resistance and durability.

The hydration process takes place in the hydration tank 11, while the carbonation process occurs in the carbonation tank 12. Preferably, each tank has 11, 12 a conical section, facilitating the movement of the reaction mixture. The tanks 11, 12 are connected via their conical sections by an automatically regulated valve 13, which controls the flow of the reaction mixture between the tanks 11, 12.

The hydration tank 11 is equipped with the CO₂ injection nozzles 22, preferably four high-pressure nozzles 22 symmetrically positioned around the perimeter of the lower cylindrical part of the hydration tank 11 and . The nozzles 22 are designed to inject fine CO₂ bubbles into the hydration tank 11.
The hydration tank 11 is designed for the initial interaction of carbon dioxide supplied with the nozzles 22 with water supplied as a component of the process liquid form the tank 30, to form an intermediate product (carbonic acid).

The hydration tank 11 is equipped with three electrodes: two donor-acceptor electrodes 141 and 142, made of metal, preferably nickel or copper, and one auxiliary electrode 143, preferably made of titanium, stainless steel, graphite or carbon fibers. The electrodes 141, 142, 143 are centrally installed within the hydration tank 11 and are immersed in the process liquid during operation. Together with the power supply unit 52 and the measurement and control unit 51, the electrodes 141, 142, 143 form the EC module 14 that ensures precise and automated regulation of catalyst supply and removal, optimizing the HEC process for efficiency and consistency. The EC module 14 thereby ensures controlled management of the hydration reaction through the HEC process.

The donor-acceptor electrodes 141, 142 are configured to operate in the pulse-reverse mode, i.e. bipolar pulsed mode, providing stable release of the metal ions in the process liquid and maintaining a uniform concentration of the catalyst (i.e. the metal ions) by optimizing release and deposition of the catalyst, thereby accelerating the process of CO₂ binding and improving the overall efficiency of the hydration reaction. Thus, the integration of components and the use of modern electrochemical methods not only increase the yield and quality of the final product but also ensure a stable and energy-efficient CO₂ binding process.

Thus, integrating three electrodes 141, 142, 143 of the EC module 14 in the hydration tank 11 ensures the uniform release of the catalyst, maintaining optimal conditions for the hydration reaction and achieving a high conversion rate. This supports a uniform concentration of active particles in the post-reaction mixture, which increases the purity and yield of the final product.

Preferably, the hydration tank 11 is further equipped with an oxygen membrane 151 and a hydrogen membrane 161 and, which facilitate the transfer of hydrogen and oxygen to an oxygen tank 15 and a hydrogen tank 16, respectively. The flow rates of O₂ and H₂ are regulated by corresponding flow rate regulators H and I, as well as the measurement and control unit 51. This configuration ensures efficient hydration of carbon dioxide and prevents reagent imbalance in the system, providing optimal conditions for the process.

An important structural element of reactor 10 is the adjustable valve 13 that connects the two tanks 11, 12 of the reactor 10. The valve 13 enables a quasi-continuous operating mode for the system, allowing independent optimization of reaction parameters in each tank 11, 12. This design reduces downtime and maintains high productivity, ensuring economic benefits and environmental sustainability of the process.

The carbonation tank 12 is designed to convert the intermediate product (carbonic acid) into stable compounds such as CaCO₃ or MgCO₃, and an aqueous solution of NaCl, or KCl. The carbonation tank 12 preferably includes two sections, each equipped with an outlet for drainage, allowing optimized management of flows and process phases. Additionally, a section for collecting precipitated carbonate is connected to the product tank 40. This design ensures precise control of sediment and liquid extraction, simplifies preparation for the next operational cycle, and increases system productivity.
On the lower part of the carbonation tank 12, preferably filters are installed to facilitate the separation of the precipitated carbonate (CaCO₃ or MgCO3) from by-products such as the NaCl or KCl solution. This construction minimizes material losses and improves the purity of the final product.

To enhance the process efficiency, the reactor 10 is preferably equipped with an ultrasonic oscillation source 17, which can activate the chemical components in the hydration tank 11 or in the carbonation tank 12, accelerating the reaction. Ultrasonic exposure promotes intensive mixing of the reaction mixture components, speeding up the reaction between carbon dioxide and water, or solutions of M²⁺ ions (e.g., CaCl₂ or MgCl₂) and alkali metals (e.g., NaOH or KOH), respectively, ensuring high speed and efficiency of the ongoing processes.

The application of ultrasonic oscillations to either hydration tank 11 or carbonation tank 12, the integration of filters in the carbonation tank 12, and the inclusion of a sediment collection section in the carbonation tank 12 make the process highly efficient, sustainable, and economically advantageous. The sections and filters of the carbonation tank 12 are not shown in the frawnig for the sake of clarity.

### Operation of EC Module

As mentioned above, the EC module 14 facilitates the supply and capture of the metal ions which act as the catalyst in the CO₂ hydration process. The EC module 14 comprises two donor-receptor electrodes 141 and 142, and an auxiliary electrode 143, positioned in the hydration tank 11 in such a way that they are immersed in the reaction medium during the ongoing hydration process.

The donor-acceptor electrodes 141 and 142 are configured to both donate the metal ions serving as the catalyst directly into the reaction environment and accept the metal ions by reducing them to the elemental metal, thereby removing the metal ions from the reaction environment and simultaneously regenerating the catalyst by reducing the metal ions, which are deposited on the respective donor-acceptor electrode 141 or 142.

The two donor-acceptor electrodes 141, 142 are configured to work in tandem; they are made of the same metal material, selected from the group consisting of Ni and Cu, and more preferably Ni, to supply suitable metal ions serving as the catalyst: Ni²⁺ or Cu²⁺, and preferably Ni²⁺. Nickel ions (Ni²⁺) are the most preferred as the catalyst. Ni²⁺ enhances the solubility of carbon dioxide through a homogeneous catalytic process and it is stable in acidic conditions, whereas the developed EC module 14 can efficiently generate Ni²⁺ ions, facilitating the formation of carbonic acid and bicarbonate ions.

The auxiliary electrode 143 is configured to work in tandem (serving as an anode) with either of the donor-acceptor electrodes 141, 142. The auxiliary electrode 143 can be made of various suitable materials with good chemical resistance, preferably the material selected from the group consisting of titanium (Ti), stainless steel, and carbon, the latter preferably in the form of graphite or carbon fibers. Preferably, stainless steel of high corrosion resistance may be used for the auxiliary electrode 143 due to its durability. However, the most preferred material for the auxiliary electrode 143 is titanium (Ti).

In one embodiment, the donor-acceptor electrodes 141, 142 are made of nickel and are arranged parallel to each other, whereas the auxiliary electrode 143 is made of titanium. In another embodiment, the donor-acceptor electrodes 141, 142 are made of copper and are arranged parallel to each other, whereas the auxiliary electrode 143 is made of titanium.

The EC module 14 is configured to operate the electrodes 141, 142, 143 in two modes: a pulse-reverse mode involving the operation of both donor-acceptor electrodes 141, 142 for the metal ions release, and a continuous mode involving the operation of the auxiliary electrode 143 and one or both donor-acceptor electrodes 141, 142 for metal ions capture.

In the pulse-reverse mode, the EC module 14 is configured to operate in a bipolar pulsed mode. The pulses alternate between positive and negative polarity at a controlled frequency, preferably in the range of 50 to 500 Hz. The pulse duration can vary, preferably between 1 ms and 100 ms, depending on the desired concentration of the metal ions generated by the donor-acceptor electrodes 141, 142.

In one pulse, the first electrode 141 is connected as the anode (whereas the second electrode 142 is connected as the cathode), which leads to the oxidation of the anode material, providing the metal ion release in the reaction environment, in the hydration tank 11, as shown in Reaction Scheme 1:

Ni → Ni²⁺ + 2e⁻ Reaction Scheme 1

In the reaction conditions, which are acidic due to the ongoing formation of carbonic acid, the oxidation of water occurs on the surface of the anode, according to Reaction Scheme 2:

2H₂O → O₂ + 4H⁺ + 4e⁻ Reaction Scheme 2

Oxidation of water leads to the formation of oxygen and protons (hydrogen ions), which increases the acidity of the reaction environment. The oxygen can be withdrawn from the hydration tank 11 through an oxygen membrane unit 161 connected to an oxygen tank 16, preferably equipped with an oxygen compressor, e.g., a mini-compressor of oxygen built into the oxygen tank 16.

Simultaneously, the second electrode 142 is connected as a cathode, which leads to a reduction of ions present in the reaction environment, including the reduction of the catalyst molecules (Reaction Scheme 3), and reduction of protons (Reaction Scheme 4), in the hydration tank 11:

Ni²⁺ + 2e⁻ → Ni Reaction Scheme 3

2H⁺ + 2e⁻ → H₂ Reaction Scheme 4

Reduction of protons leads to the formation of hydrogen, which can be withdrawn from the hydration tank 11 through a hydrogen membrane unit 151 connected to a hydrogen tank 15, preferably equipped with a hydrogen compressor, e.g., a mini-compressor of hydrogen built into the hydrogen tank 15.

In the following pulse, the roles reverse, and the first electrode 141 becomes the cathode, whereas the second electrode 142 becomes the anode. The alternating operations described above ensure that the metal ions, serving as the catalyst, are continuously generated and released from the donor-acceptor electrodes 141, 142 in a balanced, pulsed manner, directly into the reaction environment.

The developed approach employing the pulse-reverse mode of the EC module 14 offers several additional advantages. First, it promotes the uniform distribution of the metal ions concentration in the solution, minimizing local supersaturation and ensuring reaction stability at all stages. This uniformity improves mass transfer conditions, reduces the likelihood of side reactions, and increases the overall efficiency of the process. Second, alternating polarity of the donor-acceptor electrodes 141, 142 reduces the risk of electrode degradation, extending service life of the electrodes 141, 142 by ensuring even wear of materials. However, maintaining a stable concentration of the metal ions in the reaction medium, especially during prolonged processes, is a critical factor for achieving high-quality results and process reproducibility.

Thus, pulses of positive polarity engage the first electrode 141 as the anode and the second electrode 142 as the cathode, while pulses of negative polarity engage the first electrode 141 as the cathode and the second electrode 142 as the anode. Preferably, the current density is in the range of 0.2-0.5 A/dm², and the duration of positive polarity pulses is shorter than that of negative polarity pulses. This ensures an appropriate concentration of the metal ions in the reaction medium, facilitating effective saturation of the medium with the catalyst in its active form.

Shorter positive polarity pulses, for example, between 1 ms and 30 ms, combined with high current density, accelerate the release of the metal ions from the anode, creating a high concentration of ions in the immediate vicinity of the active reaction zone. This is particularly important for maintaining a high reaction rate in dynamic systems where mass transfer plays a decisive role.

Longer negative polarity pulses, for example, between 10 ms and 60 ms, perform a stabilizing function, promoting the uniform recovery of the metal ions and preventing their excessive accumulation. This ensures stable reaction conditions throughout the process, enhancing the efficiency and reliability of the method.

The ratio of positive to negative pulse durations, for example, 1:2 or 1:3, is used in processes where medium stabilization is critical. In this case, positive pulses focus on the rapid generation of the metal ions, while negative pulses facilitate uniform distribution of the metal ions across the reaction medium. This minimizes local concentration fluctuations and ensures a uniform reaction flow.

Additionally, a pulse frequency range of 50 to 500 Hz allows the process to be adapted to the specific kinetic parameters of the reaction. Low frequencies (50-100 Hz) are used for processes with slow dynamics, where deep activation and saturation of the medium are critical. Higher frequencies (300-500 Hz) are applied in reactions with fast kinetics, where frequent renewal of the metal ions concentration is required to prevent local overload of the medium.

This combined approach to managing the polarity parameters of the EC module 14 - such as current density, pulse duration, and frequency - not only optimizes the reaction process in terms of speed but also minimizes energy consumption and side effects, ensuring high stability and efficiency for the entire system.

The EC module 14 operates in the pulse-reverse mode during the hydration reaction. The reaction progress can be monitored by measuring pH changes in the reaction environment. Following CO₂ introduction into the process liquid, the catalyzed reaction occurs, and intermediates are formed, leading to dynamic equilibrium: the concentration of carbonic acid (H₂CO₃) increases, causing a pH decrease. As the amount of bicarbonate and carbonate ions formed increases, the solution becomes more saturated with the reaction product, allowing the carbonic acid (H₂CO₃) concentration to remain high.

At a pressure of, for example, 5 atmospheres, the concentration of carbonic acid (H₂CO₃) in water, serving as the process liquid, increases due to the higher solubility of carbon dioxide (CO₂). According to Henry's Law, the solubility of CO₂ rises proportionally to the pressure, and at 5 atmospheres, the concentration of dissolved CO₂ reaches approximately 0.165 mol/L. From this amount, about 0.33% is converted into H₂CO₃, corresponding to a carbonic acid concentration of approximately 5.45×10⁻⁴ mol/L.

These conditions result in a reduction of the pH of the CO₂-saturated solution to a level of 3.5-3.6, which is significantly lower than the pH under normal conditions. The increased concentration of carbonic acid and the resulting higher acidity of the medium create favorable conditions for accelerating reaction processes, including hydration, by providing a high concentration of active components. These parameters play a key role in controlling the process and determining its completion.

Monitoring pH and the concentration of nickel ions (Ni²⁺) or copper ions (Cu²⁺) allows for precise determination of the completion of hydration. When the pH value reaches, for instance, pH value from the range of 3.5-3.6, it can be concluded that the solubility of H₂CO₃ in the aqueous medium has reached its maximum. Joint stabilization of pH, temperature, and concentration of the metal ions (Ni²⁺ or Cu²⁺) over a specific period indicates the completion of the hydration process.

To implement this approach, preferably a pH meter and an ion-selective electrode are used, providing real-time monitoring of parameters. This allows not only for managing the hydration process but also for precisely identifying its completion, thereby improving system efficiency.

When the target pH value, for example, pH = 3.5-3.6, is reached in the hydration tank 11, the hydration process in the reaction medium is considered complete, provided that both the pH and the metal ions (Ni²⁺ or Cu²⁺) concentrations have stabilized over a period sufficient to rule out dynamic changes in the medium's parameters.

At this stage, after stopping CO₂ supply and releasing the pressure, the metal ions used as the catalyst are removed. For this purpose, the EC module 14 switches from pulsed-reverse mode to continuous mode. This ensures not only the efficient extraction of the catalyst from the solution but also prevents the reaction medium from becoming re-saturated with the metal ions. During the process, application of CO₂ pressure not exceeding 15 atmospheres is accomplished, and more preferably application of CO₂ pressure in the range of 5-10 atmospheres, in the hydration tank 11 is accomplished. The pressures higher than 15 atmospheres require complex and expensive engineering solutions, increasing the cost of equipment and reactor operation. At a pressure of 5-10 atmospheres, the solubility of CO₂ nearly reaches its maximum, and further increases in pressure result in only a minimal gain in solubility. This makes the use of higher pressures unjustified in terms of process efficiency. In particular, maintaining pressure at 5-6 atmospheres requires significantly less energy compared to 10 atmospheres, reducing overall energy consumption and process costs. Further, a pressure of 5-10 atmospheres ensures the optimal rate of interaction between CO₂ and aqueous components, facilitating the rapid and efficient formation of H₂CO₃. CO₂ pressure in the range of 5-10 atmospheres represents an optimal balance between hydration efficiency, energy consumption, and equipment costs.

In the continuous mode of the EC module 14, the metal ions are reduced to a solid state and deposited alternately on the donor-receptor electrodes 141 and 142. This mechanism allows for the efficient removal of the catalyst from the post-reaction mixture, while simultaneously regenerating it and preventing corrosion of the donor electrodes. To enable this process, the EC module 14 operates in direct current (DC) mode, ensuring stable and uniform reduction of the metal ions.

In the continuous mode, either of the donor electrodes 141 or 142, or both simultaneously, can act as the cathode, while the auxiliary electrode 143 functions as the anode, providing the necessary potential for reducing the metal ions to their elemental state. This process effectively extracts the metal ions, which served as the catalyst during the pulsed-reverse mode, from the reaction mixture, leaving it catalyst-free.

The EC module 14 supports this process by maintaining a stable electron flow and a controlled reduction rate. The continuous mode may proceed until all metal ions are removed from the medium, after which the system is ready to transfer the reaction solution from the first tank 11 to the second tank 12 and reload reagents into the first tank 11.

The transition between the pulsed-reverse mode and the continuous mode is managed via the measurement and control unit 51, which allows the system parameters to be adapted according to the process stage. This flexibility ensures high catalytic efficiency and reactor stability under various conditions.

The size of the electrodes 141, 142, 143 can vary. Preferably, the size of the electrodes 141, 142, 143 is determined by the volume of the hydration tank 11. The area of the donor-acceptor electrodes 141, 142 is associated with the concentration of the catalyst in the reaction environment; the larger the area of the donor-acceptor electrodes 141, 142, the higher the concentration of the metal ions in the reaction environment.

Upon removing the metal ions, the post-reaction mixture is transferred from the hydration tank 11 to the carbonation tank 12 through the open valve 13. Next, the valve 13 is closed, tightly separating the tanks 11 and 12 of the reactor 10. The hydration tank 11 can be filled with a fresh dose of the reactants to carry out a new hydration reaction, independently from the process carried out in the carbonation tank 12. The developed construction of the reactor 10 comprising tanks 11, 12, allows for large-scale semi-continuous processing i.e., with parallel operations in different tanks 11, 12, thereby maximizing efficiency and maintaining continuity of the process. The design of the reactor 10, comprising two separate tanks 11, 12 connected by the adjustable valve 13, enables precise control, including synchronization and automation over two separate stages, namely hydration and carbonation, and allows for the optimization of conditions essential for the chemical reactions, minimizing the total cycle time.

Improvement in process efficiency can further be provided by means of the ultrasonic oscillation source 17 configured to generate ultrasound oscillations in either tank 11, 12 of the reactor 10, enabling one to conduct either oscillation-assisted hydration or oscillation-assisted carbonation process, at a given period.

The ultrasound oscillation-assisted hydration process involving the homogeneous electrocatalytic process applied by means of the EC module 14, according to the present disclosure, is especially advantageous. Treatment of the reaction mixture with ultrasonic waves facilitates the dispersion of chemical particles, thereby lowering the energy barriers associated with CO₂ hydration and increasing the contact surface area between CO₂ and water during the CO₂ hydration. This promotes the formation of the product of the reaction between carbon dioxide and water, improving the overall efficiency of hydration.

Furthermore, the ultrasonic waves induce cavitation within the reaction environment, which significantly accelerates the formation of carbonic acid. This acceleration is achieved by stabilizing intermediates such as bicarbonates, thereby increasing the concentration of carbonic acid in the reaction environment. As a result, the time required to reach reaction equilibrium, favoring the formation of products, is substantially reduced.

In a preferred embodiment, the ultrasonic waves introduced into the reaction medium have a frequency range of 20 kHz to 200 kHz and a specific power range of 20 W/dm³ to 60 W/dm³. The optimal duration of ultrasonic treatment is determined as a function of the reaction medium volume and ranges from 5 to 60 minutes for volumes up to 10 dm³. For larger volumes, a proportional increase in treatment time is recommended according to the relationship $t = k ⋅ V$ Formula i Where:
t - a treatment time
*k* - an empirical coefficient selected experimentally to ensure maximum efficiency of the reaction process, and
V - a volume of the reaction medium subjected to an ultrasonic waves treatment.

These parameters are chosen to maximize the efficiency of the reaction process, ensure uniform energy distribution, and achieve equilibrium rapidly.

To accelerate the initial stage of the reaction (molecular activation, component dispersion, initiation of mass transfer), the ultrasonic waves treatment duration is 1-5 minutes at a frequency of 20-50 kHz and an ultrasonic wave power density of 20-40 W/dm³. At this stage, the primary focus is on creating conditions for intensive interaction between reagents.
For reaction stabilization and achieving equilibrium, the ultrasonic waves treatment duration may increase to 10-30 minutes at a frequency of 50-100 kHz and an ultrasonic wave power density of 30-50 W/dm³. In this range, uniform distribution of active particles and completion of the main reaction stages are achieved.
For deep activation or complete conversion, the treatment duration can extend to 30-60 minutes, utilizing higher frequencies of 100-200 kHz and an ultrasonic wave power density of up to 60 W/dm³.

Furthermore, the carbonation process, carried out in the carbonation tank 12, utilizing ultrasonic oscillations can be highly advantageous. The application of ultrasonic oscillations additionally activates chemical components, significantly increasing the efficiency of carbonation processes. This, in turn, accelerates the rate of chemical reactions and improves the overall results of the process.
In particular, in the method presented here, the rate and efficiency of chemical processes associated with carbonation can be enhanced by applying ultrasonic oscillations during the mixing stage of the reaction product between carbon dioxide and water with an M²⁺ solution, such as an aqueous solution of CaCl₂, and an alkali metal hydroxide, such as an aqueous solution of NaOH, in the carbonation tank 12.

The power supply unit 52 provides primary power supply signals P14, P17, P21, P31 to power respective units 14, 17, 21, 31. The measurement and control unit 51 receives primary input measurement signals I14, I17 (which are output as signals 014, 017 from sensors 14, 17) and provides primary output control signals 014, 017 (which are fed to respective units 14, and 17 as their input signals I14, I17), and it is further connected with the power supply unit 52.

The meters B, C, D, E, G, L, M are provided with remote data transmission functionality, which facilitates data transmission and reduces the amount of wiring throughout the system. The measurement and control unit 51 receives secondary input measurement signals Ib, Ic, Id, Ie, Ig, Il, Im, and In from respective units B, C, D, E, G, L, M, and N (which output them as their output signals Ob, Oc, Od, Oe, Og, Ol, Om, and On) and provides primary output control signals Oa, Of, Oh, Oi, Oj, Ok to respective units A, F, H, I, J, K (which receive them as their input signals Ia, If, Ih, Ii, Ij, Ik).

Carbon dioxide flows from the carbon dioxide tank 20, through the compressor 21, to the nozzles for carbon dioxide bubble injection 22 directly to the hydration tank 11. Adjustment of carbon dioxide pressure at the outlet of the nozzles 22 is provided by a CO₂ pressure meter G, compressor outlet CO₂ pressure regulator A, and a measurement and control unit 51. The number of nozzles 22 for injecting carbon dioxide bubbles is determined according to the volume of hydration tank 11 and is preferably no fewer than four nozzles.

Simultaneously, the process liquid is supplied to the hydration tank 11 through the second channel originating from the liquid tank 30. The pressurizer 31 regulates the process liquid flow rate at the inlet to the hydration tank 11. This flow rate is synchronized with the reaction rates occurring in the carbonation tank 11. Flow regulation at the inlet of the hydration tank 11 is controlled by a compressor outlet liquid pressure regulator F, and the measurement and control unit 51.

The EC module 14 operates under the control of the measurement and control unit 51, which provides monitoring and regulation of process parameters, as well as the power supply unit 52, which ensures a stable energy supply necessary to implement the specified operating mode. In response to control signals, the EC module 14 operates either in pulse-reverse mode for releasing the catalyst or continuous mode to remove the catalyst from the reaction environment, thereby supporting the HEC process of CO₂ hydration. For continuous monitoring of the HEC process of CO₂ hydration through the generation of necessary control signals, the hydration tank 11 is equipped with hydration pH meter B, hydration temperature meter C, hydration pressure meter D, an ion-selective electrode N, as well as a measurement and control unit 51 and the power supply unit 52.

The hydration tank 11 is also provided with hydrogen and membrane 151 oxygen membrane 161 for transferring the suitable gas (H₂, O₂) to the desired tank 15, 16 through the suitable membrane 151, 161. The membranes 151, 161 are integral parts of the hydration tank 11. Adjustment of the hydrogen flow to the tank 15, and oxygen flow to the tank 16 is provided by a H₂ flow regulator I and O₂ flow regulator H accordingly, and the control unit 51. This contributes to more efficient carbon dioxide hydration and prevents local oversaturation or deficiency of the reactants.

H₂CO₃ solution flows from the hydration tank 11, through the adjustment valve 13, into the carbonation tank 12 of the reactor 10. Simultaneously, metered quantities of M²⁺ solution from the tank 18 and alkali metal hydroxide in a form of liquid solution form the tank 19 are introduced into the carbonation tank 12. The flow rates of the M²⁺ solution and alkali metal hydroxide solution are regulated by solution flow control devices: M²⁺ solution supply regulator J and metal hydroxide supply regulator K, in accordance with signals from the measurement and control unit 51. For continuous monitoring of the carbonation process through the generation of necessary control signals, the carbonation tank 12 is equipped with carbonation temperature meter M, carbonation pH meter L.

The carbonation tank 12 can be divided into two sections each comprising outlet for drainage. Additionally, the carbonation tank 12 can comprise a section for collecting precipitated carbonate. This section can be directly connected to the product tank 40 thereby allowing for precise control of the liquid and sediment extraction process, as well as providing higher efficiency of the process simplifying preparation of the tank for the next work cycle. The carbonation tank 12 can be further equipped with filters located at the lower section of the hydration tank 12 facilitating the separation of precipitated carbonates from the byproducts and unreacted components. This can be accomplished by adjustable pumping speed via drainage outlets allowing for controlling the process depending on the consistency and volume of by-products at various levels within the carbonation tank 12.
The reactor 10, in addition to the described functional capabilities, can be provided with features that further optimize the process, including sensors for ultrasonic oscillations integrated into tanks 11 and 12 and connected to the ultrasonic oscillation source 17. Preferably, the ultrasonic oscillation source 17 is equipped with adjustable output power, controlled using the ultrasonic oscillation power meter E. The ultrasonic oscillation source 17 automatically connects to the corresponding sensor depending on the current stage of the process. When the hydration process is carried out in the hydration tank 11, the ultrasonic oscillation source 17 connects to the sensor located in hydration tank 11. Similarly, during the process in the carbonation tank 12, the ultrasonic oscillation source 17 connects to the sensor in the carbonation tank 12. This switching is managed by the measurement and control unit 51, ensuring the delivery of ultrasonic oscillations to the appropriate tank.

The post-reaction mixture comprising carbonates is transferred from the carbonation tank to the product tank 40, wherein the product tank 40 can be equipped with a device for transferring the precipitated carbonate to another tank (not shown in the figures). The product tank 40 can be designed as a removable and transportable unit for the separation of components in the reaction mixture.

While the invention has been described with respect to a limited number of embodiments, it will be appreciated that many variations, modifications and other applications of the invention may be made. Therefore, the claimed invention as recited in the claims that follow is not limited to the embodiments described herein.

### LIST OF REFERENCES

10 - reactor
11 - hydration tank
12 - carbonation tank
13 - valve
14 - electrochemical catalytic (EC) module
15 - hydrogen tank
16 - oxygen tank
17 - ultrasonic oscillation source
18 - M²⁺ solution tank
19 - alkali metal hydroxide tank
20 - carbon dioxide tank
21 - compressor
22 - carbon dioxide injection nozzles
30 - liquid tank
31 - pressurizer
40 - product tank
141 - first electrode of two donor-acceptor electrodes
142 - second electrode of two donor-acceptor electrodes
143 - auxiliary electrode
144 - power supply
151 - hydrogen membrane unit
161 - oxygen membrane unit
51 - measurement and control unit
52 - power supply unit
A - CO₂ pressure regulator,
B - hydration pH meter,
C - hydration temperature meter,
D - hydration pressure meter,
E - ultrasonic oscillations power meter
F - liquid pressure regulator,
G - CO₂ pressure meter,
H - O₂ flow rate regulator,
I - H₂ flow rate regulator,
J - M²⁺ solution supply regulator,
K - alkali metal hydroxide supply regulator,
L - carbonation pH meter,
M - carbonation temperature meter,
N - an ion-selective electrode for measuring the concentration of nickel ions (Ni²⁺) in the solution.

## Claims

1. A method for producing carbonates using carbon dioxide, comprising the steps of:
- in a hydration tank (11), injecting carbon dioxide (CO₂) into a process liquid, wherein the process liquid comprises water, and reacting carbon dioxide (CO₂) with water in the presence of a catalyst to form a first reaction product, being the product of the reaction between carbon dioxide and water; and
- in a carbonation tank (12), adding to the first reaction product:
- an M²⁺ solution and
- a solution of alkali metal hydroxide
to form a second reaction product, being a carbonate salt,
**characterized by**:
- providing an electrochemical catalytic (EC) module (14) comprising electrodes,
- in the hydration tank (11), at a pressure not exceeding 15 atmospheres, providing the electrodes of the EC module (14) immersed in the process liquid, and
- while reacting carbon dioxide (CO₂) with water, supplying metal ions as the catalyst by operating the EC module (14) in a pulse-reverse mode in which one of the electrodes is arranged as a donor of the metal ions.

2. The method according to claim 1, further comprising
in the hydration tank (11), removing the metal ions from the first reaction product by operating the EC module (14) in a continuous mode in which at least one of the electrodes is arranged as an acceptor of the metal ions by reducing the metal ions on its surface.

3. The method according to any of the preceding claims, wherein the pulse-reverse mode employs operating the EC module (14) comprising a first electrode (141) and a second electrode (142) configured as two donor-acceptor electrodes (141, 142) made of the same metal, in a bipolar pulsed manner comprising alternating pulses of two polarities, wherein
- in a positive polarity, the first electrode (141) functions as the anode, and the second electrode (142) functions as the cathode, and in a negative polarity, the first electrode (141) functions as the cathode, and the second electrode (142) functions as the anode,
thereby causing:
∘ oxidation of the anode and release of the metal ions,
∘ reduction and deposition of the metal ions on the cathode,
∘ oxidation of water on the anode and release of protons and oxygen (O₂), and
∘ reduction of protons on the cathode and release of hydrogen (H₂),
- and thereby supplying the metal ions to the reacting carbon dioxide (CO₂) with water.

4. The method according to claim 3, wherein the EC module (14) operates with alternating pulses of the positive polarity and the negative polarity
- at a pulse frequency selected from the range of 50 to 500 Hz, and/or
- with a pulse duration selected in the range of 1 to 100 ms, and/or
- at a current density selected in the range of 0.05 to 0.5 A/dm².
wherein the pulses of the positive polarity are preferably shorter than the pulses of the negative polarity.

5. The method according to claim 2 and any of the preceding claims, comprising
- while reacting carbon dioxide (CO₂) with water in the presence of the metal ions, measuring pH in the hydration tank (11), and
- if the measured pH value reaches a value from the pH range of 3.5 to 3.6, switching the EC module (14) operating in the pulse-reverse mode, to the continuous mode.

6. The method according to claim 2 and any of the preceding claims, wherein the continuous mode employs operating the EC module (14) comprising at least one of the donor-acceptor electrodes (141, 142) and an auxiliary electrode (143), in a constant polarity, wherein:
- at least one of the donor-acceptor electrodes (141, 142) functions as the cathode, and
- the auxiliary electrode (143) functions as the anode,
causing reduction and deposition of the metal ions on the cathode, thereby removing the metal ions from the first reaction product.

7. The method according to any of the preceding claims, wherein
- the donor-acceptor electrodes (141, 142) are made of nickel, and the metal ions donated therefrom are nickel ions (Ni²⁺), or copper, and the metal ions donated therefrom are copper ions (Cu²⁺), and
- the auxiliary electrode (143) is made of titanium (Ti), graphite or carbon fibers.

8. The method according to any of the preceding claims, wherein
- the process liquid is water or an aqueous solution,
- the M²⁺ solution is an aqueous CaCl₂ solution or an aqueous MgCl₂ solution, and
- the solution of alkali metal hydroxide is an aqueous NaOH solution or an aqueous KOH solution.

9. The method according to any of the preceding claims, wherein the method further comprises subjecting a content of the hydration tank (11) or a content of the carbonation tank (12) to an ultrasound treatment by means of an ultrasonic oscillations source (17).

10. The method according to claim 9, wherein the ultrasound treatment is carried out applying a power in the range of 20 W/dm³ to 60 W/dm³, and/or a frequency of the ultrasonic oscillation in the range of 20 kHz to 200 kHz.

11. A system for producing carbonates through a hydration of carbon dioxide in the presence of a catalyst to obtain a first reaction product being the product of the reaction between carbon dioxide and water, and carbonation of the first reaction product to obtain a second reaction product being a carbonate salt, the system comprising:
- a carbon dioxide tank (20),
- a carbon dioxide compressor (21) for compressing the carbon dioxide;
- a liquid tank (30) for storing process liquid, wherein the process liquid comprises water,
- a pressurizer (31) for pressurizing the process liquid,
- a reactor (10) comprising:
- a hydration tank (11) for receiving the pressurized process liquid from the liquid tank (30), and the compressed carbon dioxide from the carbon dioxide tank (20), and
- a carbonation tank (12) connected with an M²⁺ solution tank (18), an alkali metal hydroxide tank (19), a second reaction product tank (40),
- wherein the hydration tank (11) and the carbonation tank (12) are connected with a valve (13) for transferring a content of the hydration tank (11) to the carbonation tank (12),
**characterized in that**:
- the system further comprises an electrochemical catalytic (EC) module (14) connected with the hydration tank (11), the EC module (14) is configured to operate in a pulse-reverse mode, for supplying metal ions as the catalyst, to the hydration tank (11), wherein the EC module (14) comprises a first electrode (141) and a second electrode (142), arranged in the hydration tank (11), configured as two donor-acceptor electrodes (141, 142) made of the same metal, configured to operate in a bipolar pulsed manner employing alternating pulses of two polarities, so that in a positive polarity, the first electrode (141) functions as an anode, and the second (142) electrode functions as a cathode, and in a negative polarity, the first electrode (141) functions as the cathode, and the second electrode (142) functions as the anode, thereby causing:
- oxidation of the anode and release of the metal ions,
- reduction and deposition of the metal ions on the cathode,
- oxidation of water on the anode and release of protons and oxygen (O₂), and
- reduction of protons on the cathode and release of hydrogen (H₂).

12. The system according to claim 11, wherein the EC module (14) is further configured to operate in a continuous mode for removing the metal ions from the first reaction product in the hydration tank (11), wherein the EC module (14) comprises an auxiliary electrode (143), arranged in the hydration tank (11), configured to function as an anode applying a continuous potential upon cooperation with at least one of the donor-acceptor electrodes (141, 142) configured to function as a cathode, so that the metal ions are reduced and deposited on the cathode.

13. The system according to claim 11 or 12, wherein the donor-acceptor electrodes (141, 142) are made of nickel or copper, and the auxiliary electrode (143) is made of titanium, graphite or carbon fibers.

14. The system according to any of claims 121to 13, wherein the system further comprises an ultrasonic oscillations source (17) for subjecting the content of the hydration tank (11) or the content of the carbonation tank (12) to an ultrasound treatment.

15. The system according to claim 15, wherein the system further comprises
- a hydrogen collection arrangement comprising a hydrogen membrane unit (151) arranged in the hydration tank (11) for selectively removing hydrohen form the hydration tank (11), a hydrogen tank (15) for collecting the removed hydrogen, and a hydrogen flow rate regulator (I) arranged between the membrane unit (151) and the hydrogen tank (15),
and/or
- an oxygen collection arrangement comprising an oxygen membrane unit (161) arranged in the hydration tank (11) for selectively removing oxygen form the hydration tank (11), a n oxygen tank (16) for collecting the removed oxygen, and a oxygen flow rate regulator (H) arranged between the membrane unit (161) and the hydrogen tank (16).
